# EUROPEAN PATENT SPECIFICATION

(11) **EP 3 961 025 B1**
(45) Date of publication and mention of the grant of the patent: **25.12.2024**
(21) Application number: 21191915.4
(22) Date of filing: 18.08.2021
(51) Int. Cl.: F02N 11/08

(54) **ENGINE STARTER**
MOTORSTARTER
DÉMARREUR DE MOTEUR

(30) Priority: 20.08.2020 JP 2020139638
(43) Date of publication of application: 02.03.2022
(73) Proprietor: Toyota Jidosha Kabushiki Kaisha, Aichi-Ken 471-8571 (JP)
(72) Inventor: MIYAZATO, Yoshiaki, Aichi-ken, 471-8571 (JP); IWASE, Yuji, Aichi-ken, 471-8571 (JP); TABATA, Mitsuhiro, Aichi-ken, 471-8571 (JP); OTA, Atsuharu, Aichi-ken, 471-8571 (JP)
(74) Representative: D Young & Co LLP

(56) References cited:
- CN-A- 107 709 116
- JP-A- 2008 213 781
- JP-A- H0 775 210
- KR-A- 20200 016 560
- US-A1- 2018 298 865

## Description

### BACKGROUND OF THE INVENTION

### 1. Field of the Invention

The present invention relates to an engine starter.

### 2. Description of the Related Art

Patent document 1 discloses a technique for stopping the engine of a vehicle to perform EV traveling when the vehicle is determined to be traveling inside an emission gas regulation area based on position information by a GPS.

### PRIOR ART DOCUMENT

### PATENT DOCUMENT

Patent Document 1: Japanese Laid-open Patent Publication No. H07-075210
JP 2008/216781 A discusses a hybrid vehicle comprising an EV switch for forcing the EV travelling and avoiding a combustion engine start so that no start would be permitted in an emission gas regulation area. CN 10 770 911 6 B discusses a starting system having a switch for selecting at least two different starting operations/modes in a hybrid vehicle: a normal start and a S/S start producing lower and higher noise at start, respectively. The normal start is usually selected while the vehicle is in an urban area to reduce noise.
US 2018/298865 A1 discusses a remote starting system with several start permission levels based, for example, on where the vehicle is located. The driver is informed whether to confirm the start, when the vehicle is in a residential area.
KR 2020/0016560 A discusses a system which detects the vehicle being inside a green zone and automatically switches a hybrid vehicle in EV travelling mode or not in consideration of the vehicle condition, the road surface condition, and the driver's will.

### SUMMARY OF THE INEVANTION

### PROBLEM TO BE SOLVED BY THE INVENTION

Inside an emission gas regulation area, a driver can be penalized for starting the engine because of a decrease in the SOC or the like by paying a fine stipulated by laws and regulations. For example, if a driver performs an engine starting operation without noticing that its own vehicle is inside an emission gas regulation area, the driver is penalized for starting the engine. Thus, a system is required in order for a driver not to be penalized although the driver mistakenly performs an engine starting operation without knowing that the driver is inside an emission gas regulation area.

The present invention has been made in view of the above, and a purpose of the present invention is to provide an engine starter capable of reducing the possibility that a driver is accidentally penalized inside an emission gas regulation area.

### MEANS FOR SOLVING THE PROBLEM

To resolve the above problem and attain the object, an engine starter of a vehicle according to the present invention, to switch between EV traveling and HV traveling includes: an engine starting unit configured to start an engine based on a starting operation by a driver of the vehicle during the EV traveling; and a starting operation switching unit configured to switch the starting operation to a first starting operation while the vehicle is traveling in an outside area of a preset emission gas regulation area and to switch the starting operation to a second starting operation different from the first starting operation while the vehicle is traveling in an inside area of the emission gas regulation area. Further, while the vehicle is performing the EV traveling in the inside area of the emission gas regulation area, the engine starting unit is not start the engine when the first starting operation is performed by the driver and to start the engine when the second starting operation is performed by the driver.

In this manner, as the starting operation to switch from the EV traveling to the HV traveling, by preparing two types of operations of the first starting operation in the outside area of the emission gas regulation area and the second starting operation in the inside area of the emission gas regulation area, the engine is not started although the driver mistakenly performs the first starting operation without recognizing that the vehicle is in the inside area of the emission gas regulation area.

In the engine starter according to the present invention, the starting operation switching unit switchs the starting operation from the first starting operation to the second starting operation when the vehicle moves from the outside area to the inside area of the emission gas regulation area.

Accordingly, it is possible to automatically switch the engine starting operation when the vehicle enters the inside area of the emission gas regulation area.

The engine starter according to the present invention further includes a notification unit configured to notify the driver that the starting operation has been switched from the first starting operation to the second starting operation when the vehicle moves from the outside area to the inside area of the emission gas regulation area.

Accordingly, it is possible for the driver to recognize that the engine starting operation has been switched when the vehicle moves from the outside area to the inside area of the emission gas regulation area.

The engine starter according to the present invention further includes a notification unit configured to notify the driver that the vehicle is traveling in the inside area of the emission gas regulation area when the first starting operation is performed by the driver while the vehicle is performing the EV traveling in the inside area of the emission gas regulation area.

Accordingly, it is possible for the driver to recognize that the vehicle is traveling in the inside area of the emission gas regulation area when the driver mistakenly performs the first starting operation without recognizing that the vehicle is in the inside area of the emission gas regulation area.

In the engine starter according to the present invention, the vehicle includes a switching button in a vehicle interior, the first starting operation is to press the switching button once, and the second starting operation is to long-press the switching button for a predetermined time or to press the switching button successively a predetermined number of times.

Accordingly, by preparing a plurality of engine starting operations using the switching button corresponding to the outside area and the inside area of the emission gas regulation area, the engine is not started although the driver performs an erroneous starting operation.

In the engine starter according to the present invention, the vehicle includes a microphone to collect the driver's voice in a vehicle interior, the first starting operation is to utter a first utterance sentence by the driver, and the second starting operation is to utter a second utterance sentence different from the first utterance sentence by the driver.

Accordingly, by preparing a plurality of engine starting operations using the driver's utterance voice corresponding to the outside area and the inside area of the emission gas regulation area, the engine is not started although the driver performs an erroneous starting operation.

### EFFECT OF THE INVENTION

According to the present invention, although a driver mistakenly performs a first starting operation without recognizing that its vehicle is in an inside area of an emission gas regulation area, the engine is not started, and it is possible to reduce the possibility that the driver is accidentally penalized.

### BRIEF DESCRIPTION OF THE DRAWINGS

FIG. 1 is a block diagram schematically illustrating a configuration of a geo-fencing system including an engine starter according to an embodiment;
FIG. 2 is a flowchart illustrating a first example of a processing procedure of an engine starting method performed by the engine starter according to the embodiment;
FIG. 3 is a diagram illustrating an example of a warning screen to be displayed on a display unit when a driver performs an erroneous starting operation in the engine starting method illustrated in FIG. 2;
FIG. 4 is a flowchart illustrating a second example of a processing procedure of an engine starting method performed by the engine starter according to the embodiment; and
FIG. 5 is a diagram illustrating an example of a warning screen to be displayed on the display unit when a driver performs an erroneous starting operation in the engine starting method illustrated in FIG. 4.

### DETAILED DESCRIPTION OF THE PREFERRED EMBODIMENT

An engine starter according to an embodiment of the present invention is described with reference to the drawings. Note that, the constituent elements in the following embodiment include those that can be easily replaced by those skilled in the art or are substantially the same.

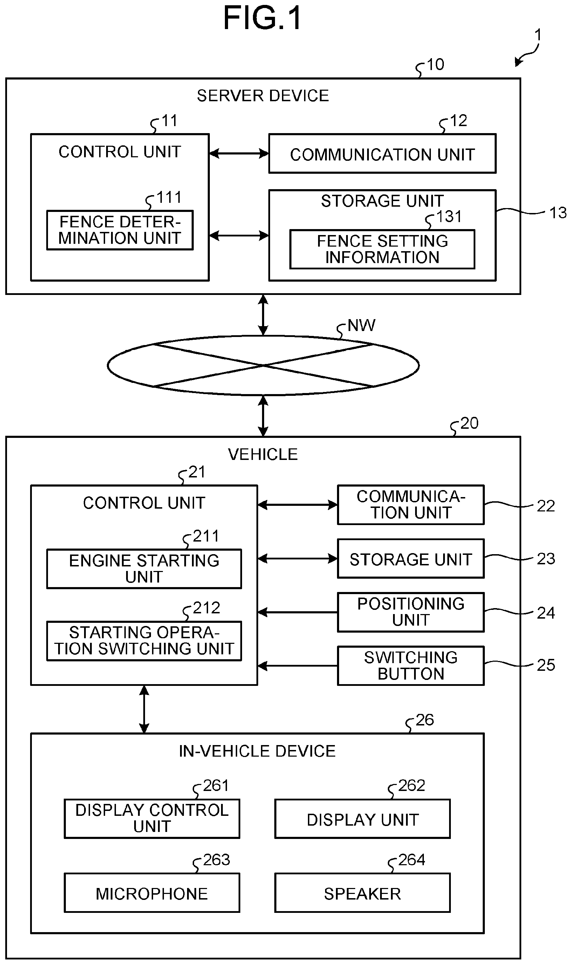

The engine starter according to the embodiment of the present invention is described with reference to FIG. 1. As illustrated in FIG. 1, a geo-fencing system 1 including the engine starter according to the present embodiment includes a server device 10 and a vehicle 20 including an in-vehicle device 26. Specifically, the engine starter according to the present embodiment is implemented by the functions of a control unit 21 and the in-vehicle device 26 of the vehicle 20. In addition, only one vehicle 20 is illustrated in the drawing, but there may be a plurality of vehicles 20.

The server device 10 and the vehicle 20 each have a communication function and are configured to be able to communicate with each other through a network NW. This network NW is implemented by, for example, the Internet network, a mobile phone network or the like.

The server device 10 performs processing related to geo-fencing based on position information of the vehicle 20 acquired from the vehicle 20 (hereinafter, referred to as "vehicle position information"). The server device 10 is implemented by a general-purpose computer such as a workstation, a personal computer, or the like.

In the geo-fencing, for example, an emission gas regulation area where emission gas is regulated (hereinafter, referred to as a "geo-fencing zone") is set in a certain area of a city to prohibit HV traveling using the engine inside the geo-fencing zone and only allow EV traveling. Then, in the geo-fencing, if a driver starts the engine of the vehicle 20 inside the geo-fencing zone (when performing HV traveling), a penalty is imposed on the vehicle 20 or the driver.

The "penalty" is a punishment for an act prohibited in the geo-fencing (here, starting the engine) and is stipulated by, for example, laws and regulations of local governments. Specific examples of the penalty include payment of taxes and fines, or travel restriction measures or travel prohibition measures inside the geo-fencing zone.

As illustrated in FIG. 1, the server device 10 includes a control unit 11, a communication unit 12, and a storage unit 13. The control unit 11 specifically includes a processor implemented by a central processing unit (CPU), a digital signal processor (DSP), a field-programmable gate array (FPGA) or the like, and a memory (main storage unit) implemented by a random access memory (RAM), a read only memory (ROM) or the like.

The control unit 11 loads and executes a program stored in the storage unit 13 in the work area of the main storage unit and controls each component or the like through the execution of the program to implement a function matching a predetermined purpose. The control unit 11 specifically functions as a fence determination unit 111 through the execution of the program described above.

The fence determination unit 111 determines whether the vehicle 20 has entered the inside of the geo-fencing zone based on the vehicle position information collected from the vehicle 20 through the network NW and fence setting information 131 stored in the storage unit 13. Then, the fence determination unit 111 outputs information as to whether the vehicle 20 has entered the inside of the geo-fencing zone (hereinafter, referred to as "fence determination information") to the vehicle 20 through the network NW.

The communication unit 12 is implemented by, for example, a local area network (LAN) interface board, a wireless communication circuit for wireless communication or the like. The communication unit 12 is connected to the network NW such as the Internet, which is a public communication network. Then, the communication unit 12 communicates with the vehicle 20 by connecting to the network NW.

The storage unit 13 is implemented by recording media such as an erasable programmable ROM (EPROM), a hard disk drive (HDD), a removable medium and the like. Example of the removable media include disc recording media such as a universal serial bus (USB) memory, a compact disc (CD), a digital versatile disc (DVD), and a Blu-ray (registered trademark) disc (BD). The storage unit 13 can store an operating system (OS), various programs, various tables, various databases and the like.

The storage unit 13 stores the fence setting information 131 including information on, for example, the range (area) of the geo-fencing zone and the like. The storage unit 13 may store, in addition to the fence setting information 131, the vehicle position information and the like through the network NW as needed.

### Vehicle

The vehicle 20 is a mobile body capable of communicating with the outside and is implemented by a hybrid vehicle, a plug-in hybrid vehicle or the like. That is, the vehicle 20 is a vehicle capable of switching between EV traveling and HV traveling. In addition, the vehicle 20 may be either a manually driven vehicle or an automatically driven vehicle.

As illustrated in FIG. 1, the vehicle 20 includes a control unit 21, a communication unit 22, a storage unit 23, a positioning unit 24, a switching button 25, and an in-vehicle device 26. The control unit 21 is an electronic control unit (ECU) that comprehensively controls the operations of various constituent elements mounted on the vehicle 20. Specifically, the control unit 21 functions as an engine starting unit 211 and a starting operation switching unit 212 through the execution of the program stored in the storage unit 23.

The engine starting unit 211 starts the engine of the vehicle 20 based on an engine starting operation by the driver of the vehicle 20 while the vehicle 20 is performing the EV traveling. As the engine starting operation, two types of engine starting operations of a first starting operation and a second starting operation are prepared.

The first starting operation is a starting operation for starting the engine and switching to the HV traveling while the vehicle 20 is performing the EV traveling outside the geo-fencing zone. The second starting operation is a starting operation for starting the engine and switching to the HV traveling while the vehicle 20 is performing the EV traveling inside the geo-fencing zone.

While the vehicle 20 is performing the EV traveling inside the geo-fencing zone, the engine starting unit 211 does not start the engine when the first starting operation is performed by the driver and starts the engine when the second starting operation is performed by the driver. Similarly, while the vehicle 20 is performing the EV traveling outside the geo-fencing zone, the engine starting unit 211 does not start the engine when the second starting operation is performed by the driver and starts the engine when the first starting operation is performed by the driver.

Examples of methods of the engine starting operation (starting operation mode) include the following methods (1) to (3). Note that, as the method of the engine starting operation, any one of the following methods (1) to (3) may be used, or the following methods (1) to (3) may be used in combination.
(1) Method using the switching button 25
(2) Method using the driver's utterance voice
(3) Method using the display by the display unit 262 of the in-vehicle device 26

In the case of the starting operation using the switching button 25, the first starting operation can be set to, for example, the operation "to press the switching button 25 once" or the like, and the second starting operation can be set to, for example, the operation "to long-press the switching button 25 for a predetermined time or to press the switching button 25 successively a predetermined number of times" or the like. The button operation for the first starting operation and the button operation for the second starting operation are not limited to the above examples as long as they are different button operations. However, since the vehicle 20 is assumed to generally travel outside the geo-fencing zone and travel inside the geo-fencing zone only in certain cases, it is preferable that the first starting operation to be performed more frequently is a simpler (easier) operation than the second starting operation as in the above examples.

In this manner, by preparing a plurality of engine starting operations using the switching button 25 corresponding to the inside and outside of the geo-fencing zone, the engine is not started although the driver performs an erroneous starting operation inside the geo-fencing zone.

In the case of the starting operation using the driver's utterance voice, the first starting operation can be set to the utterance of an utterance sentence (a first utterance sentence) such as "start the engine normally" or the like, and the second starting operation can be set to the utterance of an utterance sentence (a second utterance sentence) such as "start the engine inside the zone" or the like. Note that, the utterance sentence for the first starting operation and the utterance sentence for the second starting operation are not limited to the above examples as long as they are different utterance sentences.

In this manner, by preparing a plurality of engine starting operations using the driver's utterance voice corresponding to the inside and outside of the geo-fencing zone, the engine is not started although the driver performs an erroneous starting operation inside the geo-fencing zone.

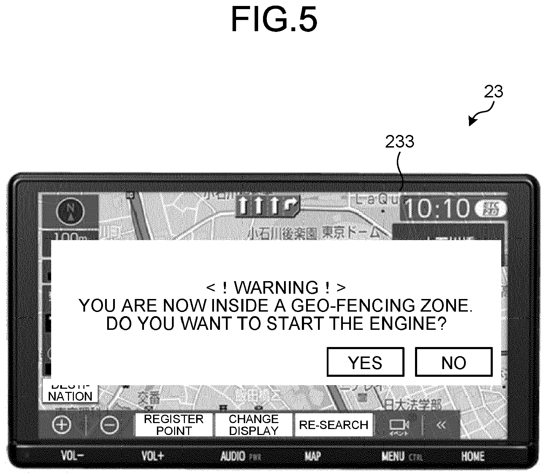

In the case of the starting operation using the display unit 262 of the in-vehicle device 26, in a certain situation (for example, when the driver tries to start the engine inside the geo-fencing zone), options as to whether to start the engine (see FIG. 5) is displayed on the display unit 262 to determine whether to start the engine based on the driver's selection by finger or voice.

In this manner, by performing the engine starting operation using the display unit 262 of the in-vehicle device 26, the engine is not started although the driver performs an erroneous starting operation inside the geo-fencing zone.

The starting operation switching unit 212 switches the starting operation according to whether the vehicle 20 is inside or outside the geo-fencing zone. While the vehicle 20 is traveling outside the geo-fencing zone, the starting operation switching unit 212 switches the starting operation to the first starting operation. On the other hand, while the vehicle 20 is traveling inside the geo-fencing zone, the starting operation switching unit 212 switches the starting operation to the second starting operation different from the first starting operation.

The timing at which the starting operation switching unit 212 switches the starting operation is preferably, for example, the timing at which the vehicle 20 moves from the inside to the outside (or from the outside to the inside) of the geo-fencing zone. That is, the starting operation switching unit 212 switches the starting operation from the first starting operation to the second starting operation when the vehicle 20 moves from the outside of the geo-fencing zone to the inside of the geo-fencing zone. In addition, the starting operation switching unit 212 switches the starting operation from the second starting operation to the first starting operation when the vehicle 20 moves from the inside of the geo-fencing zone to the outside of the geo-fencing zone. Accordingly, when the vehicle 20 enters the inside of the geo-fencing zone (or the outside of the geo-fencing zone), it is possible to automatically switch the engine starting operation.

The communication unit 22 is implemented by, for example, a data communication module (DCM) or the like and wirelessly communicates with the server device 10 through the network NW. The storage unit 23 stores, for example, the vehicle position information detected by the positioning unit 24, information on the first starting operation and the second starting operation, the fence determination information acquired from the fence determination unit 111 of the server device 10 and the like as needed.

The positioning unit 24 receives radio waves from a global positioning system (GPS) satellite and detects the vehicle position information. Then, the positioning unit 24 outputs the detected vehicle position information to the server device 10. The detection method of the vehicle position information is not limited to the method using a GPS satellite, and a method combining, for example, light detection and ranging or laser imaging detection and ranging (LiDAR) and a three-dimensional digital map may be used.

The switching button 25 is a button for switching the traveling mode of the vehicle 20. The switching button 25 is provided, for example, on the dashboard or the like of the vehicle interior of the vehicle 20. When the switching button 25 is pressed by the driver during the EV traveling, the engine is started to switch to the HV traveling.

Note that, the switching button 25 may be a button that only switches from the EV traveling to the HV traveling or may be a button that alternately switches between the EV traveling and the HV traveling. If the switching button 25 can alternately switch between the EV traveling and the HV traveling, the engine stops to switch to the EV traveling when the driver presses the switching button 25 during the HV traveling. In addition, when the HV traveling is switched to the EV traveling, the switching may be performed by the same method as the above method (pressing once, long-pressing for a predetermined time, pressing successively a predetermined number of times or the like) or by a different method from the above method.

The in-vehicle device 26 is, for example, a car navigation system provided on a dashboard or the like in the vehicle interior of the vehicle 20. The in-vehicle device 26 includes a display control unit 261, a display unit 262, a microphone 263, and a speaker 264.

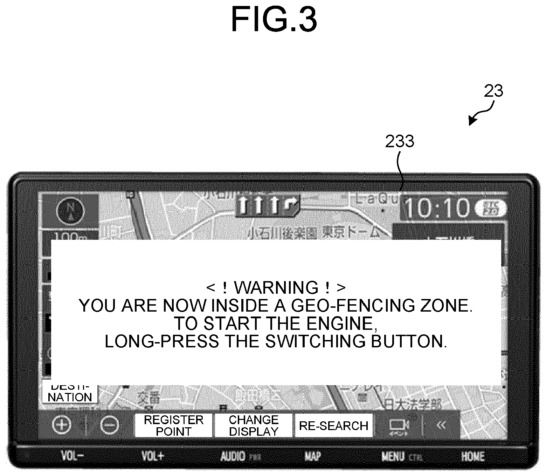

The display control unit 261 controls the display content on the display unit 262. The information to be displayed by the display control unit 261 on the display unit 262 is, for example, information notifying the driver that the vehicle 20 has moved from the outside of the geo-fencing zone to the inside of the geo-fencing zone, information notifying the driver that the vehicle 20 has moved from the inside of the geo-fencing zone to the outside of the geo-fencing zone, information notifying the driver that the engine starting operation has switched from the first starting operation to the second starting operation, information notifying the driver that the engine starting operation has switched from the second starting operation to the first starting operation, a warning screen when the driver performs an erroneous starting operation inside the geo-fencing zone (see FIGS. 3 and 5 described later) or the like.

The display unit 262 is implemented by, for example, a liquid crystal display (LCD), an organic EL display (OLED) or the like and displays predetermined information to the driver. The display unit 262 may be implemented by a touch panel display capable of accepting operations by a driver's finger, a pen, or the like.

The microphone 263 is for collecting the voice uttered by the driver. The speaker 264 is for outputting predetermined information by voice to the driver. Note that, the display unit 262 and the speaker 264 function as a "notification unit" in the present invention.

The display unit 262 or the speaker 264 may notify the driver, by text or voice, that the engine starting operation has switched from the first starting operation to the second starting operation when the vehicle 20 moves from the outside of the geo-fencing zone to the inside of the geo-fencing zone. Accordingly, it is possible for the driver to recognize that the engine starting operation has switched when the vehicle 20 moves from the outside of the geo-fencing zone to the inside of the geo-fencing zone.

In addition, the display unit 262 or the speaker 264 may notify the driver, by text or voice, that the vehicle 20 is traveling inside the geo-fencing zone (see FIGS. 3 and 5 described later) when, for example, the first starting operation is mistakenly performed by the driver while the vehicle 20 is performing the EV traveling inside the geo-fencing zone. Accordingly, it is possible for the driver to recognize that the vehicle 20 is traveling inside the geo-fencing zone when the driver mistakenly performs the first starting operation without recognizing that the vehicle 20 is inside the geo-fencing zone.

### Engine starting method, First example

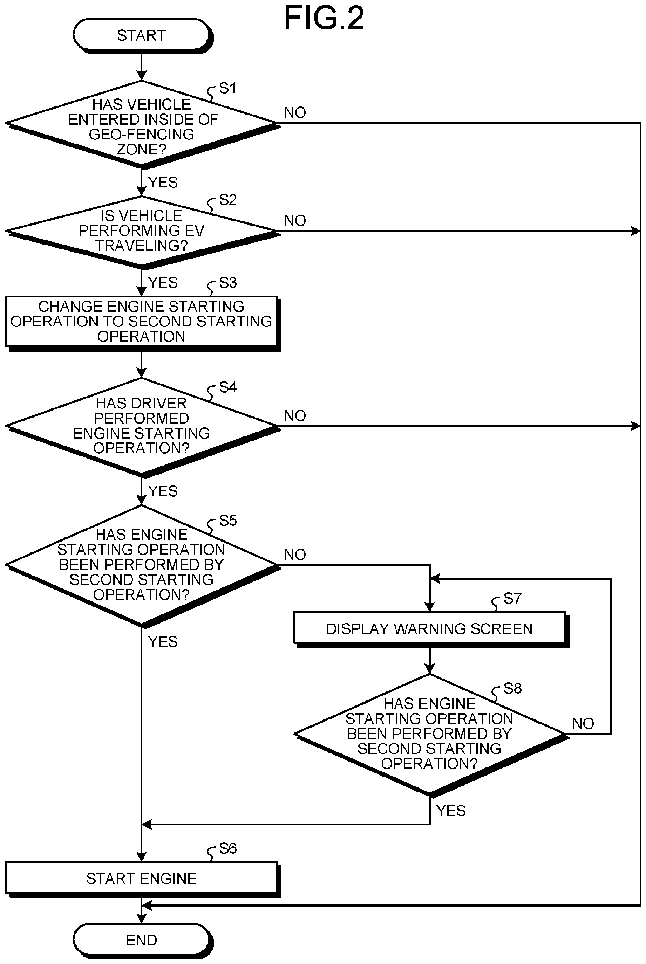

A first example of a processing procedure of an engine starting method performed by the engine starter according to the present embodiment is described with reference to FIGS. 2 and 3.

First, the starting operation switching unit 212 of the vehicle 20 determines whether the vehicle 20 has entered the inside of the geo-fencing zone from the outside of the geo-fencing zone (step S1). In step S1, the starting operation switching unit 212 determines, based on the fence determination information acquired from the fence determination unit 111 of the server device 10, whether the vehicle 20 has entered the inside of the geo-fencing zone.

When determining that the vehicle 20 has not entered the inside of the geo-fencing zone (No in step S1), the starting operation switching unit 212 terminates the processing. On the other hand, when determining that the vehicle 20 has entered the inside of the geo-fencing zone (Yes in step S1), the starting operation switching unit 212 determines whether the vehicle 20 is performing the EV traveling (step S2).

When determining that the vehicle 20 is not performing the EV traveling (No in step S2), the starting operation switching unit 212 terminates the processing. On the other hand, when determining that the vehicle 20 is performing the EV traveling (Yes in step S2), the starting operation switching unit 212 changes the engine starting operation from the first starting operation (for example, pressing the switching button 25 once) to the second starting operation (for example, long-pressing the switching button 25 for a predetermined time or pressing the switching button 25 successively a predetermined number of times) (step S3).

Then, the engine starting unit 211 determines whether the driver has performed the engine starting operation (step S4). When determining that the driver has not performed the engine starting operation (No in step S4), the engine starting unit 211 terminates the processing. On the other hand, when determining that the driver has performed the engine starting operation (Yes in step S4), the engine starting unit 211 determines whether the driver has performed the engine starting operation by the second starting operation (step S5).

When determining that the driver has performed the engine starting operation by the second starting operation (Yes in step S5), the engine starting unit 211 starts the engine (step S6) and terminates the processing. On the other hand, when determining that the driver has not performed the engine starting operation by the second starting operation, that is, when determining that the driver has performed the engine starting operation by the first starting operation (No in step S5), the display control unit 261 of the in-vehicle device 26 displays a warning screen on the display unit 262 (step S7).

The warning screen displayed on the display unit 262 in step S7 includes, for example, the information indicating that the vehicle 20 is currently traveling inside the geo-fencing zone and information prompting the driver to perform the second starting operation (for example, long-pressing the switching button 25) in order to start the engine as illustrated in FIG. 3. In step S7, the driver may be notified of similar content by voice through the speaker 264 at the same time when the warning screen is displayed on the display unit 262.

Then, the engine starting unit 211 determines whether the driver has performed the engine starting operation by the second starting operation (step S8). When determining that the driver has not performed the engine starting operation by the second starting operation, that is, when determining that the driver has performed the engine starting operation by the first starting operation (No in step S8), the engine starting unit 211 returns to step S7. On the other hand, when determining that the driver has performed the engine starting operation by the second starting operation (Yes in step S8), the engine starting unit 211 proceeds to step S6.

### Engine starting method, Second example

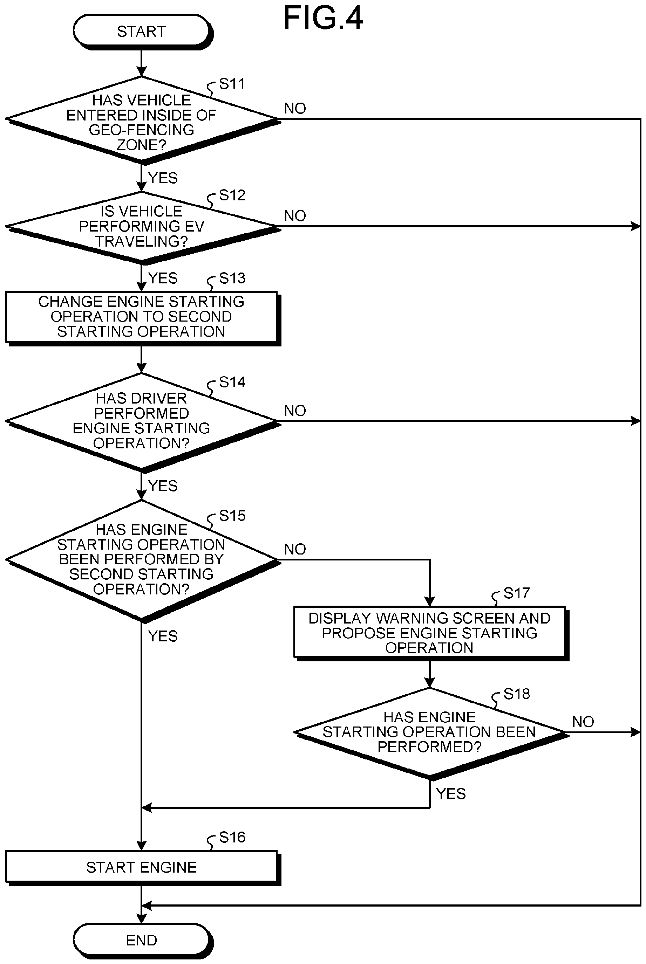

The second example of a processing procedure of an engine starting method performed by the engine starter according to the present embodiment is described with reference to FIGS. 4 and 5. In the following, an example of causing the driver to perform the starting operation through the display unit 262 of the in-vehicle device 26 when the driver performs the engine starting operation by an erroneous method inside the geo-fencing zone is described.

First, the starting operation switching unit 212 of the vehicle 20 determines whether the vehicle 20 has entered the inside of the geo-fencing zone from the outside of the geo-fencing zone (step S11). In step S11, the starting operation switching unit 212 determines, based on the fence determination information acquired from the fence determination unit 111 of the server device 10, whether the vehicle 20 has entered the inside of the geo-fencing zone.

When determining that the vehicle 20 has not entered the inside of the geo-fencing zone (No in step S11), the starting operation switching unit 212 terminates the processing. On the other hand, when determining that the vehicle 20 has entered the inside of the geo-fencing zone (Yes in step S11), the starting operation switching unit 212 determines whether the vehicle 20 is performing the EV traveling (step S12).

When determining that the vehicle 20 is not performing the EV traveling (No in step S12), the starting operation switching unit 212 terminates the processing. On the other hand, when determining that the vehicle 20 is performing the EV traveling (Yes in step S12), the starting operation switching unit 212 changes the engine starting operation from the first starting operation (for example, pressing the switching button 25 once) to the second starting operation (for example, long-pressing the switching button 25 for a predetermined time or pressing the switching button 25 successively a predetermined number of times) (step S13).

Then, the engine starting unit 211 determines whether the driver has performed the engine starting operation (step S14). When determining that the driver has not performed the engine starting operation (No in step S14), the engine starting unit 211 terminates the processing. On the other hand, when determining that the driver has performed the engine starting operation (Yes in step S14), the engine starting unit 211 determines whether the driver has performed the engine starting operation by the second starting operation (step S15).

When determining that the driver has performed the engine starting operation by the second starting operation (Yes in step S15), the engine starting unit 211 starts the engine (step S16) and terminates the processing. On the other hand, when determining that the driver has not performed the engine starting operation by the second starting operation, that is, when determining that the driver has performed the engine starting operation by the first starting operation (No in step S15), the display control unit 261 of the in-vehicle device 26 displays a warning screen on the display unit 262 and proposes the appropriate engine starting operation (step S17).

The warning screen displayed on the display unit 262 in step S17 includes the information indicating that the vehicle 20 is currently traveling inside the geo-fencing zone, information proposing the start of the engine, and the options for the propose (Yes/No) as illustrated in, for example, FIG. 5. In step S7, the driver may be notified of similar content by voice through the speaker 264 at the same time when the warning screen is displayed on the display unit 262.

Then, the engine starting unit 211 determines whether the driver has performed the engine starting operation (step S18). In step S18, a positive determination is performed when the driver selects the option of "Yes" on the warning screen (see FIG. 5), and a negative determination is performed when the driver selects the option of "No" on the warning screen.

When determining that the driver has performed the engine starting operation in step S18 (Yes in step S18), the engine starting unit 211 proceeds to step S16. On the other hand, when determining that the driver has not performed the engine starting operation (No in step S18), the engine starting unit 211 terminates the processing.

According to the engine starter according to the embodiment described above, the two types of operations of the first starting operation outside the geo-fencing zone and the second starting operation inside the geo-fencing zone are prepared as the starting operation to switch from the EV traveling to the HV traveling. Accordingly, the engine is not started although the driver mistakenly performs the first starting operation without recognizing that the vehicle 20 is inside the geo-fencing zone, and it is possible to reduce the possibility that the driver is accidentally penalized.

Note that further effects and modifications may be easily acquired by a person skilled in the art. Therefore, a wider embodiment of the present disclosure should not be limited to the specific details and typical examples as described above. That is, various modifications may be made without departing from the scope spirit of the overall present disclosure defined in the attached claims and the equivalents thereof.

For example, in the engine starter according to the embodiment, the fence determination unit 111 of the server device 10 determines whether the vehicle 20 has entered the inside of the geo-fencing zone, but the vehicle 20 may determine whether its own vehicle has entered the inside of the geo-fencing zone. That is, the control unit 21 of the vehicle 20 may function as a fence determination unit.

In addition, in the engine starter according to the embodiment, a warning screen is displayed on the display unit 262 of the in-vehicle device 26 (see FIGS. 3 and 5) when the driver performs an erroneous starting operation, but the warning screen may be displayed on, instead of the display unit 262, a terminal (for example, a smartphone, a mobile phone, a tablet terminal, a wearable computer or the like) possessed by the driver. To use the driver's terminal, the terminal and the vehicle 20 are connected by a communication function such as Wireless Fidelity (WiFi) (registered trademark), Bluetooth (registered trademark) Low Energy (BLE) or the like to associate the two when, for example, the driver gets on the vehicle 20.

## Claims

1. An engine starting system (20) of a vehicle (20) configured to switch between EV traveling and HV traveling, the engine starting system (20) comprising:
an engine starting unit (211) configured to start an engine based on determining whether a starting operation has been performed by a driver of the vehicle (20) during the EV traveling;
a positioning unit (24) configured to detect vehicle position information; and
a starting operation switching unit (212) configured to determine whether the vehicle has entered the inside of a geo-fence area based on the vehicle position information, and switch the starting operation to a first starting operation while the vehicle (20) is traveling in an outside area of the geo-fence area and to switch the starting operation to a second starting operation different from the first starting operation while the vehicle (20) is traveling in an inside area of the geo-fence area, wherein
while the vehicle (20) is performing the EV traveling in the inside area of the geo-fence area, the engine starting unit (211) is configured to not start the engine when the first starting operation is performed by the driver and to start the engine when the second starting operation is performed by the driver.

2. The engine starting system (20) according to claim 1, wherein the starting operation switching unit (212) is configured to switch the starting operation from the first starting operation to the second starting operation when the vehicle (20) moves from the outside area to the inside area of the geo-fence area.

3. The engine starting system (20) according to claim 2, further comprising a notification unit (262, 264) configured to notify the driver that the starting operation has been switched from the first starting operation to the second starting operation when the vehicle (20) moves from the outside area to the inside area of the geo-fence area.

4. The engine starting system (20) according to claim 1 or 2, further comprising a notification unit (262, 264) configured to notify the driver that the vehicle (20) is traveling in the inside area of the geo-fence area when the first starting operation is performed by the driver while the vehicle (20) is performing the EV traveling in the inside area of the geo-fence area.

5. The engine starting system (20) according to any one of claims 1 to 4, wherein
the vehicle (20) includes a switching button (25) in a vehicle interior,
the first starting operation is to press the switching button (25) once, and
the second starting operation is to long-press the switching button (25) for a predetermined time or to press the switching button (25) successively a predetermined number of times.

6. The engine starting system (20) according to any one of claims 1 to 4, wherein
the vehicle (20) includes a microphone (263) configured to collect the driver's voice in a vehicle interior,
the first starting operation is to utter a first utterance sentence by the driver, and
the second starting operation is to utter a second utterance sentence different from the first utterance sentence by the driver.

## Patentansprüche

1. Motorstartsystem (20) eines Fahrzeugs (20), das konfiguriert ist, um zwischen EV-Fahren und HV-Fahren umzuschalten, wobei das Motorstartsystem (20) Folgendes umfasst:
eine Motorstarteinheit (211), die konfiguriert ist, um einen Motor basierend auf dem Bestimmen, ob ein Startvorgang von einem Fahrer des Fahrzeugs (20) während des EV-Fahrens durchgeführt worden ist, zu starten;
eine Positionsbestimmungseinheit (24), die konfiguriert ist, um Fahrzeugpositionsinformationen zu detektieren; und
eine Startvorgangschalteinheit (212), die konfiguriert ist, um basierend auf den Fahrzeugpositionsinformationen zu bestimmen, ob das Fahrzeug nach innen in einen Geofence-Bereich hineingefahren ist, und den Startvorgang in einen ersten Startvorgang zu schalten, während das Fahrzeug (20) in einem Außenbereich des Geofence-Bereichs fährt, und den Startvorgang in einen zweiten Startvorgang, der sich von dem ersten Startvorgang unterscheidet, zu schalten, während das Fahrzeug (20) in einem Innenbereich des Geofence-Bereichs fährt, wobei
die Motorstarteinheit (211) konfiguriert ist, um, während das Fahrzeug (20) das EV-Fahren in dem Innenbereich des Geofence-Bereichs durchführt, den Motor nicht zu starten, wenn von dem Fahrer der erste Startvorgang durchgeführt wird, und den Motor zu starten, wenn von dem Fahrer der zweite Startvorgang durchgeführt wird.

2. Motorstartsystem (20) nach Anspruch 1, wobei die Startvorgangschalteinheit (212) konfiguriert ist, um den Startvorgang von dem ersten Startvorgang in den zweiten Startvorgang zu schalten, wenn sich das Fahrzeug (20) von dem Außenbereich in den Innenbereich des Geofence-Bereichs hineinbewegt.

3. Motorstartsystem (20) nach Anspruch 2, das ferner eine Benachrichtigungseinheit (262, 264) umfasst, die konfiguriert ist, um den Fahrer darüber zu benachrichtigen, dass der Startvorgang von dem ersten Startvorgang in den zweiten Startvorgang geschaltet worden ist, wenn sich das Fahrzeug (20) aus dem Außenbereich in den Innenbereich des Geofence-Bereichs hineinbewegt.

4. Motorstartsystem (20) nach Anspruch 1 oder 2, das ferner eine Benachrichtigungseinheit (262, 264) umfasst, die konfiguriert ist, um den Fahrer darüber zu benachrichtigen, dass das Fahrzeug (20) gerade in dem Innenbereich des Geofence-Bereichs fährt, wenn von dem Fahrer der erste Startvorgang durchgeführt wird, während das Fahrzeug (20) das EV-Fahren in dem Innenbereich des Geofence-Bereichs durchführt.

5. Motorstartsystem (20) nach einem der Ansprüche 1 bis 4, wobei
das Fahrzeug (20) einen Schaltknopf (25) in einem Fahrzeuginnenraum enthält,
der erste Startvorgang darin besteht, den Schaltknopf (25) einmal zu drücken, und
der zweite Startvorgang darin besteht, den Schaltknopf (25) für eine vorbestimmte Zeit lange zu drücken oder den Schaltknopf (25) nacheinander eine vorbestimmte Anzahl von Malen zu drücken.

6. Motorstartsystem (20) nach einem der Ansprüche 1 bis 4, wobei
das Fahrzeug (20) ein Mikrofon (263) enthält, das konfiguriert ist, um die Stimme des Fahrers in einem Fahrzeuginnenraum zu erfassen,
der erste Startvorgang darin besteht, dass von dem Fahrer ein erster Satz ausgesprochen wird, und
der zweite Startvorgang darin besteht, dass von dem Fahrer ein zweiter Satz, der sich von dem ersten ausgesprochenen Satz unterscheidet, ausgesprochen wird.

## Revendications

1. Système (20) de démarrage de moteur d'un véhicule (20) configuré pour commuter entre une circulation en EV et une circulation en HV, le système (20) de démarrage de moteur comportant :
une unité (211) de démarrage de moteur configurée pour démarrer un moteur d'après une détermination selon laquelle une opération de démarrage a été effectuée par un conducteur du véhicule (20) durant la circulation en EV ;
une unité (24) de positionnement configurée pour détecter des informations de position du véhicule ; et
une unité (212) de commutation d'opération de démarrage configurée pour déterminer si le véhicule est entré à l'intérieur d'une zone de géorepérage d'après les informations de position du véhicule, et pour commuter l'opération de démarrage vers une première opération de démarrage pendant que le véhicule (20) circule dans une zone d'extérieur de la zone de géorepérage et pour commuter l'opération de démarrage vers une seconde opération de démarrage différente de la première opération de démarrage pendant que le véhicule (20) circule dans une zone d'intérieur de la zone de géorepérage,
pendant que le véhicule (20) effectue la circulation en EV dans la zone d'intérieur de la zone de géorepérage, l'unité (211) de démarrage de moteur étant configurée pour ne pas démarrer le moteur lorsque la première opération de démarrage est effectuée par le conducteur et pour démarrer le moteur lorsque la seconde opération de démarrage est effectuée par le conducteur.

2. Système (20) de démarrage de moteur selon la revendication 1, l'unité (212) de commutation d'opération de démarrage étant configurée pour commuter l'opération de démarrage de la première opération de démarrage à la seconde opération de démarrage lorsque le véhicule (20) passe de la zone d'extérieur à la zone d'intérieur de la zone de géorepérage.

3. Système (20) de démarrage de moteur selon la revendication 2, comportant en outre une unité (262, 264) de notification configurée pour notifier au conducteur que l'opération de démarrage a été commutée de la première opération de démarrage à la seconde opération de démarrage lorsque le véhicule (20) passe de la zone d'extérieur à la zone d'intérieur de la zone de géorepérage.

4. Système (20) de démarrage de moteur selon la revendication 1 ou 2, comportant en outre une unité (262, 264) de notification configurée pour notifier au conducteur que le véhicule (20) circule dans la zone d'intérieur de la zone de géorepérage lorsque la première opération de démarrage est effectuée par le conducteur pendant que le véhicule (20) effectue la circulation en EV dans la zone d'intérieur de la zone de géorepérage.

5. Système (20) de démarrage de moteur selon l'une quelconque des revendications 1 à 4,
le véhicule (20) comprenant un bouton (25) de commutation dans un intérieur du véhicule,
la première opération de démarrage consistant à presser une fois le bouton (25) de commutation, et
la seconde opération de démarrage consistant à presser longuement le bouton (25) de commutation pendant un temps prédéterminé ou à presser successivement le bouton (25) de commutation un nombre prédéterminé de fois.

6. Système (20) de démarrage de moteur selon l'une quelconque des revendications 1 à 4,
le véhicule (20) comprenant un microphone (263) configuré pour recueillir la voix du conducteur dans un intérieur du véhicule,
la première opération de démarrage consistant en la prononciation d'une première phrase d'énoncé par le conducteur, et
la seconde opération de démarrage consistant en la prononciation par le conducteur d'une seconde phrase d'énoncé différente de la première phrase d'énoncé.
